# EUROPÄISCHE PATENTSCHRIFT

(11) **EP 2 265 477 B1**
(45) Veröffentlichungstag und Bekanntmachung des Hinweises auf die Patenterteilung: **17.09.2014**
(21) Anmeldenummer: 09734764.5
(22) Anmeldetag: 20.04.2009
(51) Int. Cl.: B60S 1/38

(54) **WISCHBLATT SOWIE SCHEIBENWISCHANLAGE MIT EINEM SOLCHEN WISCHBLATT**
WIPER BLADE AND WINDSHIELD WIPER SYSTEM HAVING SUCH A WIPER BLADE
BALAI D'ESSUIE-GLACE ET SYSTÈME D'ESSUIE-GLACE MUNI D'UN TEL BALAI D'ESSUIE-GLACE

(30) Priorität: 22.04.2008 DE 102008020227
(43) Veröffentlichungstag der Anmeldung: 29.12.2010
(73) Patentinhaber: Valeo Systèmes d'Essuyage, 78321 La Verrière (FR)
(72) Erfinder: EGNER-WALTER, Bruno, 74076 Heilbronn (DE); SCHÄUBLE, Michael, 71665 Vaihingen /Enz (DE)
(74) Vertreter: Vötsch, Reiner
(86) Internationale Anmeldenummer: PCT/EP2009/054662
(87) Internationale Veröffentlichungsnummer: WO 2009/130183

(56) Entgegenhaltungen:
- EP-A- 1 040 973
- DE-A1- 10 323 998
- DE-U1- 8 510 687
- US-A- 5 426 814
- US-A- 6 137 084

## Beschreibung

Die Erfindung betrifft ein Wischblatt zum Reinigen von Scheiben an Fahrzeugen nach dem Oberbegriff des Anspruchs 1 sowie eine Scheibenwischanlage unter Verwendung eines erfindungsgemäßen Wischblatts.

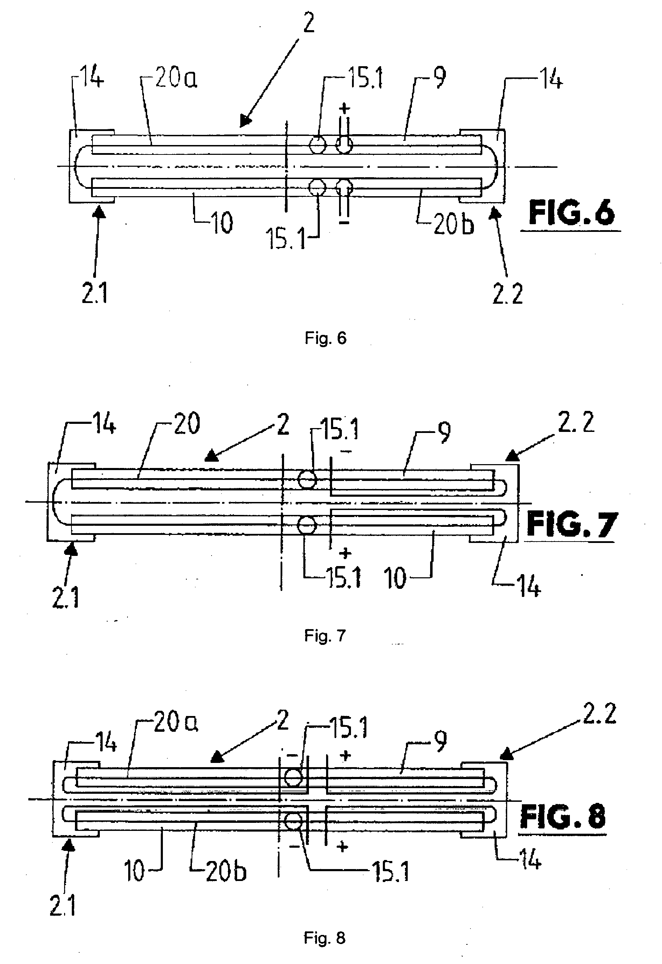

Ein Wischblatt nach dem Oberbegriff des Anspruchs 1 ist aus der US 5,426,814 bekannt. Das bekannte Wischblatt weist eine Heizeinrichtung in Form eines Heizdrahtes auf, der gemäß Fig. 6 der angesprochenen Schrift als gewundener Draht innerhalb eines Spritzkanals für eine Waschflüssigkeit angeordnet ist. Der elektrische Anschluss des Heizdrahtes erfolgt an den beiden Stirnseiten des Stirnkanals. Alternativ ist es möglich, dass der Draht an einem Ende mit der elektrischen Masse des Wischers verbunden ist. Aufgabe der Erfindung ist es, ein Wischblatt zum Reinigen von Scheiben an Fahrzeugen nach dem Oberbegriff des Anspruchs 1 derart weiterzubilden, dass eine vereinfachte elektrische Kontaktierung ermöglicht wird. Diese Aufgabe wird erfindungsgemäß bei einem Wischblatt mit den Merkmalen des Anspruchs 1 dadurch gelöst, dass der wenigstens eine Spritzkanal an einer Längsseite des Wischblatts ausgebildet ist, dass das wenigstens eine Heizelement innerhalb des Wischblattes wenigstens eine Heizschleife bildet, und dass die Enden der wenigstens einen innerhalb des Wischblattes gebildeten Heizschleife an einem Wischblattende oder aber zwischen den Wischblattenden, beispielsweise in der Mitte oder etwa in der Mitte des Wischblattes, vorgesehen sind. Darüber hinaus sind Wischblätter zur Verwendung bei Scheibenwischanlagen zum Reinigen von Scheiben in verschiedenen Ausführungen bekannt.

Bekannt sind insbesondere auch flache Wischblätter, d.h. als Flachwischblätter ausgebildete Wischblätter, die im Wesentlichen aus einem sich über die gesamte Länge des jeweiligen Wischblattes erstreckenden profil- oder leistenartigen Wischblattkörper mit wenigstens einem zumindest eine Wischlippe bildenden Wischgummi sowie aus wenigstens einer Federschiene bestehen. Bekannt ist auch derartige flache Wischblätter mit Spritzkanälen auszubilden, die sich jeweils an einer Wischblattlängsseite erstrecken und eine Vielzahl von Düsenöffnungen aufweisen, über die während des Wischbetriebes eine den Spritzkanälen von einer fahrzeugseitigen Versorgungseinheit unter Druck zugeführte Wasch- und Reinigungsflüssigkeit (in der Regel Wasser ggs. mit Reinigungs- und/oder Frostschutzzusätzen) auf die betreffende Fahrzeugscheibe ausgebracht werden kann (DE 103 23 998 A1, DE 100 00 381 A1).

Bekannt Ist weiterhin (WO 02/092237 A1), im Wischblatt ausgebildete Spritzkanäle dadurch zu beheizen, dass diese Kanäle mit einer erwärmten Wasch- und Reinigungsflüssigkeit durchströmt werden, wofür die fahrzeugseitige Versorgungseinheit mit einer entsprechenden elektrischen Heizeinrichtung versehen ist, was allerdings einen nicht unerheblichen zusätzlichen konstruktiven Aufwand bedeutet.

Bekannt ist weiterhin auch (EP 0 667 267 A1) an der Fahrzeugkarosserie montierte Spritzdüsen einer Scheibenwaschanlage sowie auch die an diese Spritzdüsen führenden Versorgungsleitungen durch ein sich innerhalb dieser Versorgungsleitungen und der Spritzdüsen erstreckendes und von einem Heizleiter oder Heizdraht gebildetes Heizelementes zu beheizen, um ein Vereisen der Düsen sowie der Versorgungsleitungen zu verhindern.

Bekannt ist schließlich auch (DE 100 39 290 A1, DE 102 34 267 A1), bei flachen Wischblättern den Wischgummi im Bereich seines Kippsteges oder das gesamte Wischblatt durch ein entlang des Kippsteges oder innerhalb des Wischblattes angeordnetes und eine Heizschleife bildendes elektrisches Heizelement zu beheizen, um ein Vereisen des Wischblattes und dabei insbesondere des Kippsteges zu verhindern.

Bei dem erfindungsgemäßen Wischblatt ist das wenigstens eine Heizelement innerhalb des Wischblattes so vorgesehen, dass es dort zumindest mit einer Teillänge innerhalb des wenigstens einen Spritzkanals verläuft, so dass mit dem Heizelement eine unmittelbare Beheizung dieses Spritzkanals bzw, der im Spritzkanal geführten Wasch- und Reinigungsflüssigkeit und damit auch eine unmittelbare Beheizung der wenigstens einen Düsenöffnung des Spritzkanals erfolgt. Bevorzugt ist der wenigstens eine Spritzkanal mit einer Vielzahl von Düsenöffnungen versehen.

Für die Montage des wenigstens einen Heizelementes, welches bevorzugt von einem Heizleiter oder Heizdraht gebildet ist, sind grundsätzlich keine zusätzlichen Maßnahmen am Wischblatt erforderlich, d.h. für das Verlegen des Heizelementes wird der wenigstens eine Spritzkanal genutzt, der sich entlang einer Wischblattlängsseite erstreckt. Weist das Wischblatt mehrere Spritzkanäle auf, beispielsweise wenigstens zwei Spritzkanäle, von denen sich jeder an einer Längsseite des Wischblattes befindet, so erstreckt sich die von dem wenigstens einen Heizelement gebildete Heizschleife durch sämtliche Spritzkanäle, und dabei beispielsweise so, dass das wenigstens eine Heizelement innerhalb des Wischblattes ausschließlich in den Spritzkanälen aufgenommen ist, und zwar allenfalls ausgenommen von Teillängen an den beiden Wischblattenden.

Bei einer bevorzugten Ausführungsform der Erfindung bildet das wenigstens eine Heizelement wenigstens einen zusätzlichen Heizelement-Abschnitt, der sich außerhalb des Wischblattes erstreckt und zum Beheizen zumindest einer Teillänge einer Versorgungsleitung für die Wasch- und Reinigungsflüssigkeit dient, die (Teillänge) sich in einem Bereich des Fahrzeugs befindet, in dem die Gefahr einer Vereisung der Versorgungsleitung besteht. Auch dieser zum Beheizen der Versorgungsleitung dienende Heizelement-Abschnitt ist bevorzugt im Innenraum bzw. Lumen der wenigstens einen Versorgungsleitung angeordnet.

Durch die erfindungsgemäße Ausbildung erfolgt eine unmittelbare Erwärmung der Wasch- und Reinigungsflüssigkeit zumindest in dem wenigstens einen Spritzkanal des Wischblattes, so dass bei reduziertem Bedarf an elektrischer Energie ein wirksamen Erwärmen der das Heizelement umströmenden Wasch- und Reinigungsflüssigkeit erreicht wird. Mit der Erfindung wird nicht nur ein Vereisen des wenigstens einen Wischblatt-Spritzkanals und der dortigen Düsen- oder Düsenöffnungen sowie der Versorgungsleitung wirksam verhindert, sondern durch das Erwärmen der Wasch- und Reinigungsflüssigkeit wird auch die Reinigungswirkung wesentlich verbessert.

Bei einer bevorzugten Ausbildung der Scheibenwischanlage wird das wenigstens eine Heizelement in Abhängigkeit von Umgebungsparametern und/oder in Abhängigkeit von Betriebsparametern des Fahrzeugs automatisch gesteuert oder geregelt. Eine solche Steuerung oder Regelung ist dann beispielsweise so ausgebildet, dass das Einschalten des wenigstens einen Heizelementes z.B. bei aktivierter Wischanlage in Abhängigkeit von der Außentemperatur automatisch erfolgt, und zwar dann, wenn ein vorgegebener Schwellwert, beispielsweise eine Außentemperatur von ca. 5°C unterschritten wird. Die Steuerung bzw. Regelung des wenigstens einen Heizelementes erfolgt weiterhin bevorzugt so, dass das Heizelement nach dem Einschalten zunächst über eine kurze Zeitdauer mit einer erhöhten Heizleistung betrieben wird, um eine eventuell bestehende Vereisung schnell zu beseitigen bzw. die Wasch- und Reinigungsflüssigkeit schnell zu erhitzen und so möglichst verzögerungsfrei die Betriebsfähigkeit der Scheibenwaschanlage herzustellen.

Die für die Steuerung oder Regelung des wenigstens einen Heizelementes verwendeten Betriebsparameter sind beispielsweise die Fahrgeschwindigkeit des Fahrzeugs und/oder die Wischanlagenfrequenz, d.h. die Frequenz oder Geschwindigkeit, mit der das Schwenken des wenigstens einen Wischarmes der Scheibenwischanlage erfolgt.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 in vereinfachter Darstellung und in Seitenansicht einen Wischarm zusammen mit einem an diesen Wischarm befestigten Wischblatt gemäß der Erfindung und mit zugehörigen Versorgungs- und Steuereinrichtungen;
Fig. 2 einen Querschnitt durch das Wischblatt der Figur 1;
Fig. 3 in vereinfachter Teildarstellung einen Längsschnitt durch das Wischblatt der Figur 1 im Bereich eines Wischblattendes;
Fig. 4 - 9 jeweils in schematischer Darstellung die Führung des wenigstens einen elektrischen Heizelementes bzw. die von dem wenigstens einem Heizelement gebildete oder gebildeten Heizschleife(n) innerhalb des Wischblattes bei verschiedenen Ausführungsformen, wobei die Enden der innerhalb des Wischblattes verlaufenden Heizelement-Abschnitte bzw. Heizschleifen jeweils mit " + " bzw. "- " bezeichnet sind;
Fig. 10 und 11 ein Anschlussstück zur Verwendung bei der Ausführung der Figur 9 in Seitenansicht sowie im Längsschnitt;
Fig. 12 in einer Darstellungen ähnlich den Figuren 4 - 9 eine weitere Ausführung des erfindungsgemäßen Wischblattes.

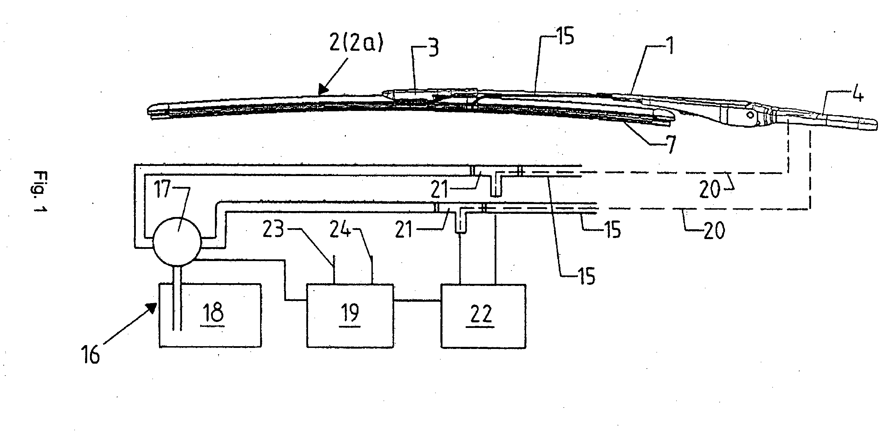

In den Figuren 1 - 4 sind 1 der Wischarm einer ansonsten nicht näher dargestellten Scheibenwischanlage für Fahrzeuge, beispielsweise für Straßenfahrzeuge, und 2 das am einen Ende des Wischarmes 1 mittels eines Adapters 3 befestigte Wischblatt. Im montierten Zustand ist der Wischarm 1 an seinem dem Adapter 3 entfernt liegenden und von einem Lagerstück 4 gebildeten Ende an einer nicht dargestellten Wischwelle eines ebenfalls nicht dargestellten Scheibenwischerantriebs befestigt.

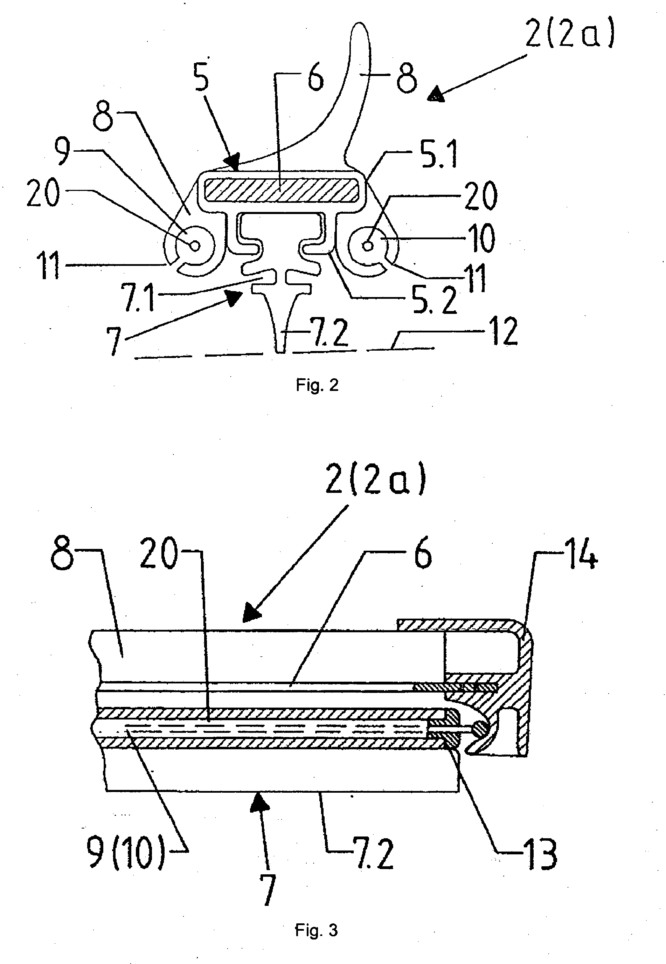

Das Wischblatt 2 ist jeweils als flaches Wischblatt ausgebildet und besteht entsprechend der Figur 2 aus einem profil- oder leistenförmigen, beispielsweise aus Kunststoff gefertigten Wischblattkörper 5, der mit einem Profilabschnitt 5.1 eine aus Federstahl gefertigte flache Federschiene 6 umschließt und an dessen Unterseite in einer C-förmigen Ausnehmung des Profilabschnitts 5.2 der von einem Profi aus einem gummielastischen Material, beispielsweise aus einem elastomeren Kunststoff oder Gummi bestehende Wischgummi 7 austauschbar befestigt ist, und zwar derart, dass dieser Wischgummi 7 insbesondere mit einem den Kippsteg 7.1 und die Wischlippe 7.2 bildenden Profilabschnitt über die Unterseite des Wischblattkörpers 5 vorsteht. Auf dem Wischblattkörper ist ein Wischblattprofil 8 befestigt, welches an der Oberseite des Wischblattes als Spoiler ausgebildet ist und beidseitig vom Profilabschnitt 5.2 jeweils einen Spritzkanal 9 bzw. 10 für eine Wasch- und Reinigungsflüssigkeit bildet, die in der Regel aus Wasser ggs. mit Reinigungs- und Gefrierschutzzusätzen besteht. Jeder Spritzkanal 9 bzw. 10, der sich entlang jeweils einer Längsseite des Wischblattes 2 erstreckt, weist eine Vielzahl von Spritz- oder Düsenöffnungen 11 auf, und zwar zum Ausbringen der Wasch- und Reinigungsflüssigkeit auf die in der Figur 2 schematisch mit 12 angedeutete Fahrzeugscheibe, gegen die die Wischlippe 7.2 zumindest während des Wischbetriebes anliegt.

Der Wischblattkörper 5 bzw. das diesen Körper bildende Profil, die Federschiene 6 sowie auch das Wischblattelement 8 mit den beiden Spritzkanälen 9 und 10 erstrecken sich jeweils über die gesamte Länge des Wischblattes. An den beiden Enden sind die Spritzkanäle 9 und 10 jeweils durch einen Verschlussstopfen 13 (Figur 3) dicht verschlossen. Weiterhin ist auf jedem Wischblattende eine Abdeckkappe 14 befestigt, die die dortigen Enden des Wischblattkörpers 5 des Wischblattelementes 8 und der Federschiene 6 abdecken und diese Elemente miteinander verbindet. Bei der dargestellten Ausführungsform ist die jeweilige Abdeckkappe 14 durch Verrasten oder auf andere geeignete Weise an dem über das Wischblattelement 8 vorstehenden Ende der Federschiene 6 befestigt.

Zum Zuführen der Wasch- und Reinigungsflüssigkeit dienen zwei Schlauchleitungen 15, die teilweise entlang des Wischarmes 1 verlaufen und die jeweils mit einem Ausgang einer Versorgungseinheit 16, d.h. mit einem Ausgang einer Pumpe 17 dieser Versorgungseinheit verbunden sind, welche zusätzlich zu der durch einen Elektromotor angetriebenen Pumpe 17 u.a. auch einen die Wasch- und Reinigungsflüssigkeit aufnehmenden Tank 18 aufweist. Mit 19 ist eine Steuereinrichtung bezeichnet, die bei eingeschalteter Scheibenwischanlage und auch eingeschalteter Scheibenwaschanlage u.a. die Pumpe 17 derart steuert, dass den Spritzkanälen 9 und 10 die Wasch- und Reinigungsflüssigkeit über die Schlauchleitungen 15 mit dem erforderlichen Druck zugeführt wird, so dass diese Wasch- und Reinigungsflüssigkeit über die Düsenöffnungen 11 auf die Fahrzeugscheibe 12 ausgebracht werden kann.

Eine Besonderheit besteht darin, dass das Wischblatt 2 bzw. dessen Spritzkanäle 9 und 10 sowie die zugehörigen Düsen 11, aber auch die Schlauchleitungen 15, letztere zumindest auf einer Teillänge, elektrisch beheizt sind, und zwar durch ein Heizelement, welches in den Figuren 1 - 4 mit 20 bezeichnet ist. Dieses Heizelement 20 besteht bei der dargestellten Ausführungsform aus einem Heizdraht, der beispielsweise einen runden Querschnitt aufweist und mit einer temperaturbeständigen und für eine elektrische Isolierung und einen Korrosionsschutz geeigneten Ummantelung versehen ist, beispielsweise mit einer Ummantelung aus Kunststoff. Für den Heizdraht eignen sich beispielsweise solche Metalllegierungen, die für elektrische Heizelemente üblicherweise verwendet werden. Bevorzugt besteht der Heizdraht aus PTC, und zwar mit dem Vorteil, dass der elektrische Widerstand dieses Heizdrahtes mit zunehmender Temperatur ansteigt, wodurch beim Betrieb des Heizelementes 20 mit einer vorgegebenen Spannung die Heizleistung mit ansteigender Temperatur abnimmt, hierdurch u.a. eine temperaturabhängige Regelung der Heizleistung des Heizelementes 20 sowie auch erreicht wird, dass das Heizelement nach dem Einschalten zunächst mit erhöhter Heizleistung betrieben wird, die dann verzögert abnimmt. Der Querschnitt sowie die Länge des das Heizelement 20 bildenden Heizdrahtes sind beispielsweise so gewählt, dass das Heizelement 20 einen elektrischen Widerstand im Bereich zwischen einem und vierzig Ohm aufweist.

Das Heizelement 20 ist bei der in den Figuren 1 - 4 dargestellten Ausführungsform innerhalb der Spritzkanäle 9 und 10 sowie der Schlauchleitungen 15 lose geführt, und zwar derart, dass das Heizelement 20 im Wischblatt eine Heizschleife mit folgendem Verlauf bildet:
Ausgehend von einem Heizelementende durch eine Schlauchleitung 15 an die Mitte des Wischblattes 2,
von der Mitte des Wischblattes 2 im Spritzkanal 9 an ein Wischblattende 2.2,
von dem Wischblattende 2.2 abgedichtet durch die Verschlussstopfen 13 im Spritzkanal 10 an das Wischblattende 2.1,
von dem Wischblattende 2.1 wiederum abgedichtet durch die Verschlussstopfen 13 hindurchgeführt im Spritzkanal 9 zu der Mitte des Wischblattes 2 und
von der Mitte des Wischblattes 2 durch die andere Schlauchleitung 15 an das andere Heizelementende.

Im Bereich der Wischblattenden ist das Heizelement 20 jeweils durch die dortige Abdeckkappe 14 abgedeckt.

Zum Einführen des Heizelementes 20 in die Schlauchleitungen 15 sind diese im Bereich der Versorgungseinheit 10 mit einem T-Stück 21 versehen, welches eine mit der betreffenden Schlauchleitung 15 und einem Anschluss der Pumpe 17 verbundenen Strömungskanal bildet, in den das jeweilige Heizelement 20 abgedichtet eingeführt ist. Für den Betrieb des Heizelementes 20 ist eine Treiberstufe 22 vorgesehen, die ebenfalls von der Steuereinrichtung 19 angesteuert wird, und zwar unter Berücksichtigung verschiedener Schalt- und/oder Regelgrößen bzw. -parameter. So erfolgt beispielsweise das Aktivieren des Heizelementes 20 erst dann, wenn auch die Wischanlage und/oder die Versorgungseinheit 16 aktiviert sind, und zwar beispielsweise in Abhängigkeit von einem mit der Steuereinheit 19 verbundenen Regensensor 23.

Weiterhin erfolgt der Betrieb des Heizelementes 20 bevorzugt in Abhängigkeit von der Außentemperatur, d.h. in Abhängigkeit von dem Messsignal wenigstens eines diese Außentemperatur erfassenden und mit der Steuereinrichtung 19 ebenfalls verbundenen Temperatursensor 24. Diese von der Außentemperatur abhängige Regelung der Leistung des Heizelementes 20 erfolgt dann beispielsweise in Stufen oder aber stufenlos derart, dass das Heizelement 20 grundsätzlich erst dann aktiviert wird, wenn die Außentemperatur einen vorgegebenen Schwellwert unterschreitet, d.h. die Aktivierung des Heizelementes 20 erfolgt z.B. erst dann, wenn die Außentemperatur gleich oder kleiner 5°C ist. Die anschließende Regelung der Heizleistung des Heizelementes 20 erfolgt dann z.B. temperaturabhängig, d.h. mit abnehmender Temperatur wird die Heizleistung des Heizelementes 20 kontinuierlich oder in Stufen erhöht. Weitere Parameter für die Regelung oder Steuerung der Heizleistung des Heizelementes 20 sind beispielsweise die Fahrgeschwindigkeit des Fahrzeugs und/oder die Wischanlagenfrequenz, und zwar in der Form, dass bei einer Erhöhung der Fahrgeschwindigkeit und/oder der Wischanlagenfrequenz über die die Treiberstufe 22 ansteuernde Steuereinrichtung 19 auch eine Erhöhung der Heizleistung des Heizelementes 20 erfolgt.

Durch das elektrische Heizelement 20 wird ein Vereisen der Spritzkanäle 9 und 10, der dortigen Düsenöffnungen 11 sowie der Schlauchleitungen 15 wirksam verhindert, zumal das im Lumen der Spritzkanäle 9 und 10 sowie der Schlauchleitungen 15 lose verlegte Heizelemente 20 von der Wasch- und Reinigungsflüssigkeit umströmt unmittelbar auf diese einwirkt. Weiterhin lässt sich durch Erwärmen der Wasch- und Reinigungsflüssigkeit auch deren Reinigungswirkung wesentlich verbessern.

Die beiden Schlauchleitungen 15 sind mit den Spritzkanälen 9 und 10 jeweils in der Mitte des Wischblattes 2, beispielsweise über im Adapter 3 integrierte Anschlüsse 15.1 verbunden.

Um ein vereinfachtes Austauschen des gesamten Wischblattes 2 zu ermöglichen, ist das Heizelement 20 vorzugsweise mehrteilig ausgebildet, d.h. bestehend aus einem sich durch die Spritzkanäle 9 und 10 erstreckenden Abschnitt sowie aus zwei sich jeweils in den Schlauchleitungen 15 erstreckenden Abschnitten, wobei die Abschnitte im Bereich des Adapters 3 elektrisch miteinander zu dem Heizelement 20 verbunden sind. Der Adapter 3 ist hierfür zweiteilig ausgeführt, und zwar bevorzugt derart, dass beim Verbinden der beiden Adapterteile sowohl die Fluidverbindung zwischen den Schlauchleitungen 15 und den Spritzkanälen 9 bzw. 10, als auch die elektrische Verbindung zwischen den dann in Serie miteinander verbundenen Abschnitten des Heizelementes 20 hergestellt wird.

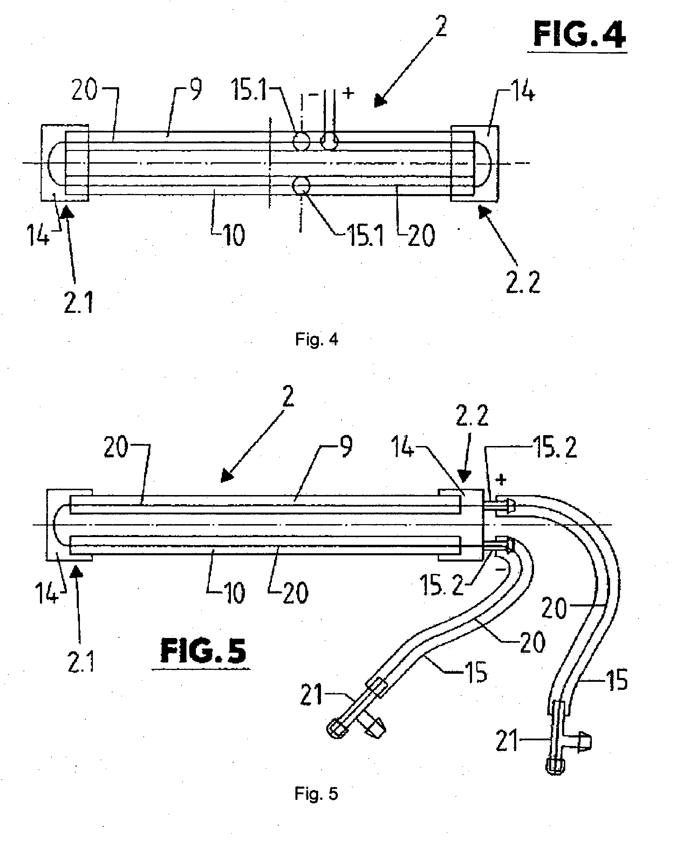

Die Figur 5 zeigt schematisch als weitere mögliche Ausführung ein Wischblatt 2, welches sich von dem Wischblatt 2 im Wesentlichen nur dadurch unterscheidet, dass die Schlauchleitungen 15 nicht in der Mitte des Wischblattes, sondern an dem Wischblattende 2.2 mit dem jeweiligen Spritzkanal 9 bzw. 10 über Anschlüsse 15.2 verbunden sind und sich dementsprechend auch das innerhalb der Schlauchleitungen 15 angeordnete Heizelement 20 ausgehend von dem Wischblattende 2.2 durch den Spritzkanal 9 zu dem Wischblattende 2.1 und von dort zurück durch den Spritzkanal 10 an das Wischblattende 2.2 erstreckt.

Den Ausführungen der Figuren 4 und 5 ist gemeinsam, dass sich das einzige Heizelement 20 innerhalb des Wischblattes 2 ausschließlich in den Spritzkanälen 9 und 10 erstreckt.

Die Figur 6 zeigt schematisch eine Ausführungsform, bei der zumindest innerhalb der Spritzkanäle 9 und 10 zwei jeweils eine Heizschleife formende und von einem Heizdraht mit Ummantelung gebildete Heizelemente vorgesehen sind, und zwar ein Heizelement 20a, welches ausgehend von der Mitte des Wischblattes 2 im Spritzkanal 9 zu dem Wischblattende 2.1 und von dort im Spritzkanal 10 zurück in die Mitte des Wischblattes 2 verläuft, und ein weiteres Heizelement 20b, welches von der Wischblattmitte im Spritzkanal 9 zu dem Wischblattende 2.2 und von dort im Spritzkanal 10 zurück in die Wischblattmitte verläuft. Die beiden Heizelemente 20a und 20b sind auch bei dieser Ausführungsform beispielsweise wiederum durch die an den Anschlüssen 15.1 angeschlossenen und die Spritzkanäle 9 und 10 mit der Versorgungseinheit 16 verbindenden Schlauchleitungen 15 geführt.

Die Figur 7 zeigt schematisch eine Ausführungsform, bei der ein einziges Heizelement 20 innerhalb des Wischblattes 2 durch die Spritzkanäle 9 und 10 so geführt ist, dass das Heizelement von dem Wischblattende 2.2 durch den Spritzkanal 9 an das Wischblattende 2.1 und von dort durch den Spritzkanal 10 zurück an das Wischblattende 2.2 erreicht. Von dem Wischblattende 2.2 ist das Heizelement 20 jeweils außerhalb der Spritzkanäle 9 und 10 zurück in die Wischblattmitte geführt, und zwar beispielsweise in einer kanalartigen Aussparung innerhalb oder unterhalb des als Spoiler ausgebildeten Profilabschnittes des Wischblattelementes 8 oder aber seitlich von dem Kippsteg 7.1 zur Verhinderung einer Vereisung des Wischgummis im Bereich des Kippstegs 7.1. Ausgehend von der Wischblattmitte verläuft das Heizelement 20 dann wiederum innerhalb der Schlauchleitungen 15.

Die Figur 8 zeigt schematisch eine Ausführungsform, bei der zumindest im Bereich des Wischblattes 2 zwei Heizelemente 20a und 20b verwendet sind, und zwar in der Form, dass sich das Heizelement 20a durch den Spritzkanal 9 und das Heizelement 20b durch den Spritzkanal 10 erstreckt, und zwar jeweils zwischen den beiden Wischblattenden 2.1 und 2.2. Beide Heizelemente 20a und 20b sind außerhalb der Spritzkanäle 9 und 10, beispielsweise wiederum in kanalartigen Ausnehmungen im Bereich des als Spoiler ausgebildeten Profilabschnittes des Wischblattelementes 8 in die Wischblattmitte geführt und verlaufen dann z.B. innerhalb der Schlauchleitungen 15 an die die Heizelemente 20a und 20b ansteuernde Treiberstufe.

Allen vorgenannten Ausführungsformen ist gemeinsam, dass jeder Spritzkanal 9 bzw. 10 jeweils über eine eigene Schlauchleitung 15 mit der Versorgungseinheit 16 verbunden ist und hierfür einen eigenen Anschluss 15.1 für die betreffende Schlauchleitung 15 aufweist.

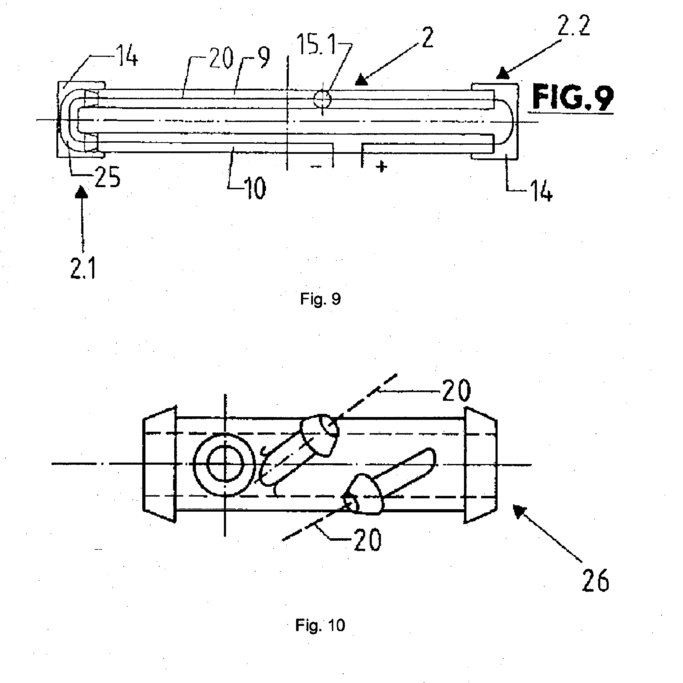

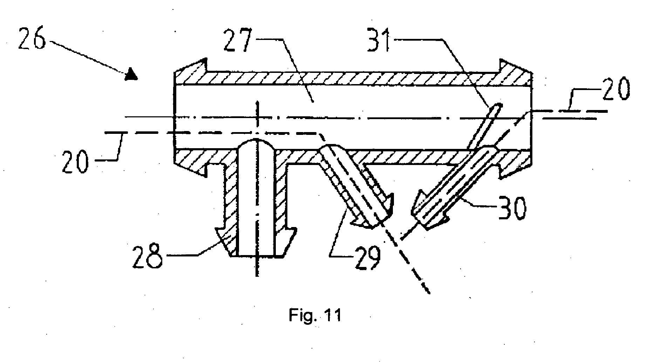

Die Figuren 9 - 11 zeigen ein Wischblatt 2, bei dem für die beiden Spritzkanäle 9 und 10 lediglich eine einzige, gemeinsame Schlauchleitung 15 zur Verbindung mit der Versorgungseinheit 16 vorgesehen ist und hierfür in der Wischblattmitte lediglich der Spritzkanal 9 den Anschluss 15.1 aufweist. An dem Wischblattende 2.1 sind die beiden Spritzkanäle 9 und 10 über ein in der dortigen Abdeckkappe 14 aufgenommenes Verbindungsstück 25 miteinander strömungsmäßig verbunden. Das Heizelement 20 ist bei dieser Ausführungsform durch die Spritzkanäle 9 und 10 des Wischblattes 2 so geführt, dass es sich ausgehend von der Wischblattmitte an das Wischblattende 2.1, dort durch das Verbindungsstück 25 hindurch in den Spritzkanal 10, in diesem zum Wischblattende 2.2 und von dort im Spritzkanal 9 zurück in die Wischblattmitte erstreckt. Bei dieser Ausführungsform verläuft das Heizelement 20 z.B. nur innerhalb des Wischblattes 2 und nicht auch innerhalb der an dem Anschluss 15.1 angeschlossenen Schlauchleitung 15. Hierfür sind die beiden Enden des Heizelementes 20 an einem den Anschluss 15.1 bildenden Anschlussstück 26 abgedichtet aus dem Spritzkanal 9 herausgeführt. Das Anschlussstück 26 ist hierfür entsprechend den Figuren 10 und 11 hülsen- oder rohrförmig ausgeführt, und zwar mit einem beidendig offenen Kanal 27, der Teil des Spritzkanals 9 ist und in den seitlich ein Anschlussstutzen 28 zum Anschließen der einzigen Schlauchleitung 15 mündet. In den Kanal 27 münden weiterhin zwei zusätzliche Hilfsstutzen 29 und 30 derart, dass die Achsen dieser Stutzen gegenüber der Achse des Kanals 27 entgegengesetzt geneigt sind. Durch die Hilfsstutzen 29 und 30 sind die Enden des Heizelementes 20 abgedichtet aus dem Spritzkanal 9 herausgeführt.

Die Montage des Wischblattes 2 der Figur 9 mit dem Heizelement 20 erfolgt beispielsweise so, dass das Heizelement 20 mit einem Ende voraus zunächst durch den Hilfsstutzen 19 in den Spritzkanal 9, dann über das Verbindungsstück 25 durch den Spritzkanal 10 und anschließend von dem Wischblattende 2.2 zurück in den Spritzkanal 9 eingeschoben wird, so dass dieses Ende schließlich durch den Hilfsstutzen 30 aus dem Kanal 27 nach außen gelangt. Um diese Montage zu vereinfachen, ist im Inneren des Kanals 27 im Bereich des Hilfsstutzens 30 ein Wandabschnitt 31 vorgesehen, der beim Durchschieben des Heizelementes 20 das hierbei vorauseilende Ende in den Hilfsstutzen 30 leitet und hierfür eine parallel zur Achse der Öffnung des Hilfsstutzens 30 verlaufende Anlage- oder Leitfläche bildet.

Die beiden durch die Hilfsstutzen 29 und 30 abgedichtet herausgeführten Enden des Heizelementes 20 sind beispielsweise über entsprechende elektrische Verbindungsleitungen mit der Treiberstufe 22 verbunden.

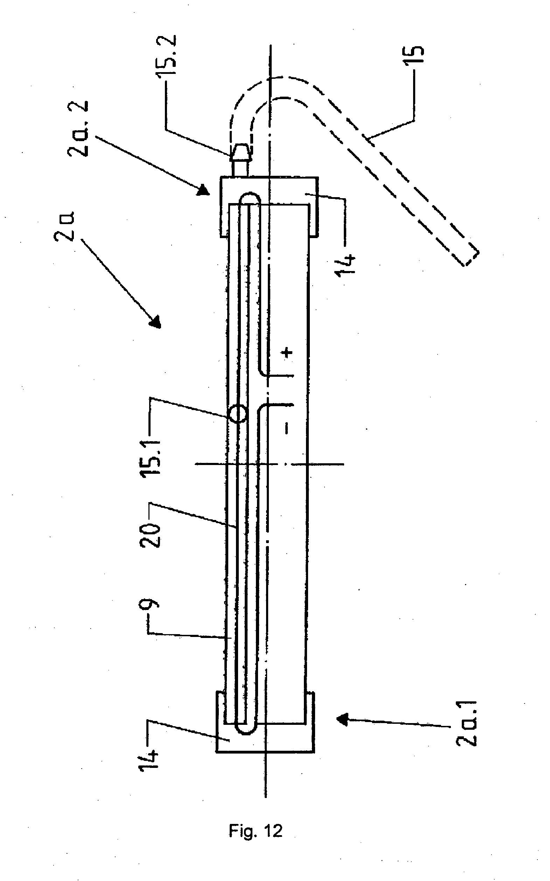

Die Figur 12 zeigt schließlich ein Wischblatt 2a, welches lediglich einen Spritzkanal, nämlich den Spritzkanal 9 aufweist, durch welches sich das Heizelement 20 zwischen den beiden Wischblattenden 2a.1 und 2a.2 erstreckt. Von beiden Enden ist das Heizelement 20 außerhalb des Spritzkanals 9, d.h. beispielsweise in einem Kanal im Bereich des spoilerartigen Profilabschnittes des Wischblattelementes 8 in die Wischblattmitte zurückgeführt, wo die Enden des Heizelementes 20 dann beispielsweise über elektrische Leitungen mit der Treiberstufe 22 verbunden sind.

Das Wischblatt 2a weist in der Wischblattmitte den Anschluss 15.1 für die Schlauchleitung 15 zum Zuführen der Wasch- und Reinigungsflüssigkeit auf. Grundsätzlich besteht aber bei dieser Ausführungsform auch die Möglichkeit, an dem Wischblattende 2a.2 den Anschluss 15.2 für die Schlauchleitung 15 vorzusehen.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

So wurde beispielsweise bei den im Zusammenhang mit den Figuren 1 - 8 beschriebenen Ausführungsformen davon ausgegangen, dass sich die Heizelemente 20 bzw. 20a und 20b auch in den Schlauchleitungen 15 zum Zuführen der Wasch- und Reinigungsflüssigkeit erstrecken. Grundsätzlich besteht aber die Möglichkeit, die Heizelemente 20 bzw. 20a und 20b auch bei diesen Ausführungsformen jeweils nur am Wischblatt 2 vorzusehen.

Weiterhin wurde vorstehend davon ausgegangen, dass das jeweilige Heizelement 20 bzw. 20a und 20b ein Heizdraht mit rundem Querschnitt ist. Selbstverständlich kann der das jeweilige Heizelement bildende Heizdraht auch einen anderen Querschnitt aufweisen.

## Patentansprüche

1. Wischblatt zum Reinigen von Scheiben an Fahrzeugen, insbesondere Kraftfahrzeugen, mit wenigstens einem vorzugsweise leistenartigen Wischblattkörper (5), mit wenigstens einem am Wischblattkörper (5) befestigten, zumindest eine Wischlippe (7.2) bildenden Wischgumml, mit wenigstens einem Spritzkanal (9, 10) am Wischblatt (2, 2a) für eine Wasch- und Reinigungsflüssigkeit sowie mit wenigstens einer Düsenöffnung (11) am Spritzkanal (9, 10) zum Ausbringen der Wasch- und Reinigungsflüssigkeit, wobei wenigstens ein elektrisches Heizelement (20, 20a, 20b) vorgesehen ist, welches sich zumindest mit einer Teillänge durch den wenigstens einen Spritzkanal (9, 10) erstreckt,
**dadurch gekennzeichnet,**
**dass** der wenigstens eine Spritzkanal (9, 10) an einer Längsseite des Wischblatts (2, 2a) ausgebildet ist, dass das wenigstens eine Heizelement (20, 20a, 20b) innerhalb des Wischblattes (2, 2a) wenigstens eine Heizschleife bildet, und dass die Enden der wenigstens einen innerhalb des Wischblattes (2, 2a) gebildeten Heizschleife an einem Wischblattende (2.2, 2a.2) oder aber zwischen den Wischblattenden (2.1,2.2;2a.1,2a.2), beispielsweise in der Mitte oder etwa in der Mitte des Wischblattes (2, 2a), vorgesehen sind.

2. Wischblatt nach Anspruch 1, **dadurch gekennzeichnet, dass** es als flaches Wischblatt zumindest bestehend aus dem leistenartigen Wischblattkörper (5) mit dem wenigstens einen Wischgummi (7) und mit wenigstens einer Federschiene (6) ausgebildet ist, und dass der wenigstens eine Spritzkanal (9, 10) an einer Längsseite des Wischblattes (2, 2a) in einem dortigen Abschnitt des Wischblattkörpers (5) oder eines mit dem Wischblattkörper verbundenen Wischblattelementes (8) ausgebildet ist.

3. Wischblatt nach einem der vorhergehenden Ansprüche, **dadurch gekennzeichnet, dass** entlang des wenigstens einen Spritzkanals (9, 10) eine Vielzahl von Düsenöffnungen vorgesehen ist.

4. Wischblatt nach einem der vorhergehenden Ansprüche, **dadurch gekennzeichnet, dass** an beiden Wischblattlängsseiten jeweils wenigstens ein Spritzkanal (9, 10) vorgesehen ist, und dass sich das wenigstens eine Heizelement (20, 20a) mit mindestens einer Teillänge durch sämtliche Spritzkanäle (9, 10) erstreckt.

5. Wischblatt nach einem der vorhergehenden Ansprüche, **dadurch gekennzeichnet, dass** zumindest an einem Wischblattende (2,1, 2.2; 2a.1, 2a.2) der zumindest eine Spritzkanal (9, 10) durch einen Verschluss (13) verschlossen ist, durch den das Heizelement (20, 20a, 20b) abgedichtet hindurchgeführt ist, und dass an dem Wischblattenden (2.1,2.2; 2a.1, 2a.2) eine beispielsweise aus Kunststoff gefertigte Abdeckkappe (14) vorgesehen ist, die das Heizelement (20, 20a, 20b) an einer aus dem Verschluss (13) herausgeführten Teillänge abdeckt und/oder fixiert.

6. Wischblatt nach Anspruch 1, **dadurch gekennzeichnet, dass** die Enden der wenigstens einen innerhalb des Wischblattes (2, 2a) gebildeten Heizschleife an oder im Bereich wenigstens eines Anschlusses (15.1, 15.2) zum Verbinden des wenigstens einen Spritzkanals (9, 10) mit einer Versorgungsleitung (15) zum Zuführen der Wasch- und Reinigungsflüssigkeit vorgesehen sind.

7. Wischblatt nach einem der vorhergehenden Ansprüche, **dadurch gekennzeichnet, dass** das wenigstens eine Heizelement (20, 20a, 20b) innerhalb des Wischblattes (2, 2a) ausschließlich oder nahezu ausschließlich in dem wenigstens einen Spritzkanal (9, 10) angeordnet ist.

8. Wischblatt nach einem der vorhergehenden Ansprüche, **dadurch gekennzeichnet, dass** das wenigstens eine Heizelement (20, 20a, 20b) mit wenigstens einer Teillänge im oder am Wischblatt (2, 2a) außerhalb des mindestens einen Spritzkanals (9, 10) verlaufend vorgesehen ist.

9. Wischblatt nach einem der vorhergehenden Ansprüche, **dadurch gekennzeichnet, dass** die wenigstens eine von dem mindestens einen Heizelement (20, 20a, 20b) innerhalb des Wischblattes gebildete Heizschleife über äußere Anschlüsse mit einer elektrischen Versorgungseinheit (22) verbindbar ist, und dass die äußeren Anschlüsse von elektrischen Leitungen oder aber zumindest teilweise von einer Teillänge des wenigstens einen Heizelementes (20, 20a, 20b), vorzugsweise von einer zumindest eine Versorgungsleitung (15) zum Zuführen der Wasch- und Reinigungsflüssigkeit beheizenden Teillänge des wenigstens einen Heizelementes (20, 20a, 20b) gebildet sind.

10. Wischblatt nach einem der vorhergehenden Ansprüche, **dadurch gekennzeichnet, dass** das wenigstens eine Heizelement (20, 20a, 20b) von einem Heizdraht, vorzugsweise von einem ummantelten Heizdraht, beispielsweise aus PTC gebildet ist.

11. Wischblatt nach einem der vorhergehenden Ansprüche, **dadurch gekennzeichnet, dass** der wenigstens eine Wischgummi (7) austauschbar am Wischblattkörper (5) befestigt ist

12. Scheibenwischanlage zum Reinigen von Scheiben an Fahrzeugen, mit wenigstens einem Wischarm (1) und mindestens einem an dem Wischarm (1) vorgesehenen Wischblatt (2, 2a) mit wenigstens einem mindestens eine Düsenöffnung (11) aufweisenden Spritzkanal (9, 10), der über eine Versorgungsleitung (15) mit einer Versorgungseinheit (16) für eine Wasch- und Reinigungsflüssigkeit verbunden ist, **dadurch gekennzeichnet, dass** das wenigstens eine Wischblatt (2, 2a) nach einem der vorhergehenden Ansprüche ausgebildet ist, und dass das wenigstens eine elektrische Heizelement (20, 20a, 20b) mit einer fahrzeugseitigen elektrischen Versorgungseinheit oder einer Treiberstufe (22) dieser Versorgungseinheit verbunden ist

13. Scheibenwischanlage nach Anspruch 12, **dadurch gekennzeichnet, dass** das wenigstens eine Heizelement (20, 20a, 20b) aus einem in dem wenigstens einen Wischblatt (2, 2a) angeordneten Heizelementabschnitt sowie aus wenigstens einem weiteren Heizelementabschnitt zum Beheizen zumindest einer Teillänge der wenigstens einen Versorgungsleitung (15) besteht.

14. Scheibenwischanlage nach einem der vorhergehenden Ansprüche, **gekennzeichnet durch** eine elektrische Versorgungseinheit (19, 22), mit der das wenigstens eine Heizelement (20, 20a, 20b) bzw. die Heizleistung dieses Heizelementes in Abhängigkeit von Umgebungsparametern (z.B. Außentemperatur am Fahrzeug) und/oder Betriebsparametern des Fahrzeugs (z.B. Fahrgeschwindigkeit und/oder Wischanlagenfrequenz) geschaltet oder gesteuert wird.

15. Scheibenwischanlage nach einem der vorhergehenden Ansprüche, **dadurch gekennzeichnet, dass** die elektrische Versorgungseinheit (19, 22) für eine Steuerung oder Regelung des wenigstens einen Heizelementes (20, 20a, 20b) in der Weise ausgebildet ist, dass das Einschalten des wenigstens einen Heizelementes (20, 20a, 20b) erst dann erfolgt, wenn die Außentemperatur am Fahrzeug einen vorgegebenen Schwellwert, beispielsweise eine Temperatur von etwa 5°C unterschreitet, und/oder dass das wenigstens eine Heizelement (20, 20a, 20b) nach dem jeweiligen Einschalten zunächst mit erhöhter Heizleistung betrieben wird.

## Claims

1. Wiper blade for cleaning windows on vehicles, in particular motor vehicles, having at least one preferably bar-like wiper blade body (5), having at least one wiper rubber which is fastened to the wiper blade body (5) and forms at least one wiping lip (7.2), having at least one spraying duct (9, 10) on the wiper blade (2, 2a) for a washing and cleaning liquid, and having at least one nozzle opening (11) on the spraying duct (9, 10) for ejecting the washing and cleaning liquid, at least one electric heating element (20, 20a, 20b) being provided which extends at least with a part length through the at least one spraying duct (9, 10), **characterized in that** the at least one spraying duct (9, 10) is formed on a longitudinal side of the wiper blade (2, 2a), **in that** the at least one heating element (20, 20a, 20b) forms at least one heating loop within the wiper blade (2, 2a), and **in that** the ends of the at least one heating loop which is formed within the wiper blade (2, 2a) are provided at one wiper blade end (2.2, 2a.2) or else between the wiper blade ends (2.1, 2.2; 2a.1, 2a.2), for example in the centre or approximately in the centre of the wiper blade (2, 2a).

2. Wiper blade according to Claim 1, **characterized in that** it is configured as a flat wiper blade at least consisting of the bar-like wiper blade body (5) with the at least one wiper rubber (7) and with at least one spring bar (6), and **in that** the at least one spraying duct (9, 10) is formed on a longitudinal side of the wiper blade (2, 2a) in a section there of the wiper blade body (5) or of a wiper blade element (8) which is connected to the wiper blade body.

3. Wiper blade according to either of the preceding claims, **characterized in that** a multiplicity of nozzle openings are provided along the at least one spraying duct (9, 10).

4. Wiper blade according to one of the preceding claims, **characterized in that** in each case at least one spraying duct (9, 10) is provided on both wiper blade longitudinal sides, and **in that** the at least one heating element (20, 20a) extends with at least one part length through all the spraying ducts (9, 10).

5. Wiper blade according to one of the preceding claims, **characterized in that** the at least one spraying duct (9, 10) is closed at least at one wiper blade end (2.1, 2.2; 2a.1, 2a.2) by way of a closure (13), through which the heating element (20, 20a, 20b) is guided in a sealed manner, and **in that** a covering cap (14) which is produced, for example, from plastic and covers and/or fixes the heating element (20, 20a, 20b) on a part length which is guided out of the closure (13) is provided at the wiper blade end (2.1, 2.2; 2a.1, 2a.2).

6. Wiper blade according to Claim 1, **characterized in that** the ends of the at least one heating loop which is formed within the wiper blade (2, 2a) are provided on or in the region of at least one connector (15.1, 15.2) for connecting the at least one spraying duct (9, 10) to a supply line (15) for feeding in the washing and cleaning liquid.

7. Wiper blade according to one of the preceding claims, **characterized in that** the at least one heating element (20, 20a, 20b) within the wiper blade (2, 2a) is arranged exclusively or virtually exclusively in the at least one spraying duct (9, 10).

8. Wiper blade according to one of the preceding claims, **characterized in that** the at least one heating element (20, 20a, 20b) is provided with at least one part length so as to run in or on the wiper blade (2, 2a) outside the at least one spraying duct (9, 10).

9. Wiper blade according to one of the preceding claims, **characterized in that** the at least one heating loop which is formed by the at least one heating element (20, 20a, 20b) within the wiper blade can be connected via external connectors to an electric supply unit (22), and **in that** the external connectors are formed by electrical lines or else at least partially by a part length of the at least one heating element (20, 20a, 20b), preferably by a part length of the at least one heating element (20, 20a, 20b), which part length heats at least one supply line (15) for feeding in the washing and cleaning liquid.

10. Wiper blade according to one of the preceding claims, **characterized in that** the at least one heating element (20, 20a, 20b) is formed by a heating wire, preferably by an encapsulated heating wire, for example from PTC.

11. Wiper blade according to one of the preceding claims, **characterized in that** the at least one wiper rubber (7) is fastened exchangeably to the wiper blade body (5).

12. Window wiping system for cleaning windows on vehicles, having at least one wiping arm (1) and at least one wiper blade (2, 2a) which is provided on the wiping arm (1) with at least one spraying duct (9, 10) which has at least one nozzle opening (11) and is connected via a supply line (15) to a supply unit (16) for a washing and cleaning liquid, **characterized in that** the at least one wiper blade (2, 2a) is configured according to one of the preceding claims, and **in that** the at least one electric heating element (20, 20a, 20b) is connected to a vehicle-side electric supply unit or a driver stage (22) of the said supply unit.

13. Window wiping system according to Claim 12, **characterized in that** the at least one heating element (20, 20a, 20b) consists of a heating element section which is arranged in the at least one wiper blade (2, 2a) and of at least one further heating element section for heating at least one part length of the at least one supply line (15).

14. Window wiping system according to one of the preceding claims, **characterized by** an electric supply unit (19, 22), by way of which the at least one heating element (20, 20a, 20b) or the heating output of the said heating element is switched or controlled depending on ambient parameters (for example, external temperature at the vehicle) and/or operating parameters of the vehicle (for example, driving speed and/or wiping system frequency).

15. Window wiping system according to one of the preceding claims, **characterized in that** the electric supply unit (19, 22) is configured to control or regulate the at least one heating element (20, 20a, 20b) in such a way that the at least one heating element (20, 20a, 20b) is switched on only when the external temperature at the vehicle undershoots a predefined threshold value, for example a temperature of approximately 5°C, and/or **in that** the at least one heating element (20, 20a, 20b) is first of all operated with an increased heating output after the respective switching-on operation.

## Revendications

1. Balai d'essuie-glace pour nettoyer des vitres de véhicules, en particulier de véhicules automobiles, comprenant au moins un corps de balai d'essuie-glace (5) de préférence de type baguette, comprenant au moins une raclette de balai d'essuie-glace fixée au corps de balai d'essuie-glace (5) et formant au moins une lèvre de balai d'essuie-glace (7.2), comprenant au moins un canal de pulvérisation (9, 10) sur le balai d'essuie-glace (2, 2a) pour un liquide de lavage et de nettoyage et comprenant au moins une ouverture de buse (11) au niveau du canal de pulvérisation (9, 10) pour délivrer le liquide de lavage et de nettoyage, au moins un élément chauffant électrique (20, 20a, 20b) étant prévu, lequel s'étend au moins sur une longueur partielle à travers l'au moins un canal de pulvérisation (9, 10),
**caractérisé en ce que**
l'au moins un canal de pulvérisation (9, 10) est réalisé au niveau d'un côté longitudinal du balai d'essuie-glace (2, 2a), **en ce que** l'au moins un élément chauffant (20, 20a, 20b) forme à l'intérieur du balai d'essuie-glace (2, 2a) au moins une boucle chauffante, et **en ce que** les extrémités de l'au moins une boucle chauffante sont formées à l'intérieur du balai d'essuie-glace (2, 2a) au niveau d'une extrémité de balai d'essuie-glace (2.2, 2a.2) ou bien entre les extrémités de balai d'essuie-glace (2.1, 2.2 ; 2a.1, 2a.2), par exemple au centre ou approximativement au centre du balai d'essuie-glace (2, 2a).

2. Balai d'essuie-glace selon la revendication 1, **caractérisé en ce qu'**il est réalisé sous forme de balai d'essuie-glace plat constitué au moins du corps de balai d'essuie-glace (5) de type baguette avec l'au moins une raclette de balai d'essuie-glace (7) et avec au moins un rail élastique (6), et **en ce que** l'au moins un canal de pulvérisation (9, 10) est réalisé au niveau d'un côté longitudinal du balai d'essuie-glace (2, 2a) dans une section du corps de balai d'essuie-glace (5) ou d'un élément de balai d'essuie-glace (8) connecté au corps de balai d'essuie-glace.

3. Balai d'essuie-glace selon l'une quelconque des revendications précédentes, **caractérisé en ce que** le long de l'au moins un canal de pulvérisation (9, 10) est prévue une pluralité d'ouvertures de buse.

4. Balai d'essuie-glace selon l'une quelconque des revendications précédentes, **caractérisé en ce qu'**au niveau des deux côtés longitudinaux du balai d'essuie-glace est prévu à chaque fois au moins un canal de pulvérisation (9, 10) et **en ce que** l'au moins un élément chauffant (20, 20a) s'étend sur au moins une longueur partielle à travers tous les canaux de pulvérisation (9, 10).

5. Balai d'essuie-glace selon l'une quelconque des revendications précédentes, **caractérisé en ce que** l'au moins un canal de pulvérisation (9, 10) est fermé par une fermeture (13) au niveau d'au moins une extrémité de balai d'essuie-glace (2.1, 2.2 ; 2a.1, 2a.2), à travers laquelle fermeture l'élément chauffant (20, 20a, 20b) est guidé de manière hermétique, et **en ce qu'**un capuchon de recouvrement (14), par exemple fabriqué en plastique, est prévu au niveau de l'extrémité de balai d'essuie-glace (2.1, 2.2 ; 2a.1, 2a.2), lequel recouvre et/ou fixe l'élément chauffant (20, 20a, 20b) au niveau d'une longueur partielle guidée hors de la fermeture (13).

6. Balai d'essuie-glace selon la revendication 1, **caractérisé en ce que** les extrémités de l'au moins une boucle chauffante formée à l'intérieur du balai d'essuie-glace (2, 2a) sont prévues au niveau d'au moins un raccordement (15.1, 15.2) ou dans la région de celui-ci pour relier l'au moins un canal de pulvérisation (9, 10) à une conduite d'alimentation (15) pour l'alimentation en liquide de lavage et de nettoyage.

7. Balai d'essuie-glace selon l'une quelconque des revendications précédentes, **caractérisé en ce que** l'au moins un élément chauffant (20, 20a, 20b) est disposé à l'intérieur du balai d'essuie-glace (2, 2a) exclusivement ou presque exclusivement dans l'au moins un canal de pulvérisation (9, 10).

8. Balai d'essuie-glace selon l'une quelconque des revendications précédentes, **caractérisé en ce que** l'au moins un élément chauffant (20, 20a, 20b) est prévu de manière à s'étendre sur au moins une longueur partielle dans le balai d'essuie-glace (2, 2a) ou au niveau de celui-ci à l'extérieur de l'au moins un canal de pulvérisation (9, 10).

9. Balai d'essuie-glace selon l'une quelconque des revendications précédentes, **caractérisé en ce que** l'au moins une boucle chauffante formée par l'au moins un élément chauffant (20, 20a, 20b) à l'intérieur du balai d'essuie-glace peut être connectée par le biais de raccordements extérieurs à une unité d'alimentation électrique (22) et **en ce que** les raccordements extérieurs sont formés par des conduites électriques ou au moins en partie par une longueur partielle de l'au moins un élément chauffant (20, 20a, 20b), de préférence par une longueur partielle de l'au moins un élément chauffant (20, 20a, 20b) chauffant au moins une conduite d'alimentation (15) pour l'alimentation en liquide de lavage et de nettoyage.

10. Balai d'essuie-glace selon l'une quelconque des revendications précédentes, **caractérisé en ce que** l'au moins un élément chauffant (20, 20a, 20b) est formé par un fil chauffant, de préférence par un fil chauffant gainé, par exemple en PTC.

11. Balai d'essuie-glace selon l'une quelconque des revendications précédentes, **caractérisé en ce que** l'au moins une raclette de balai d'essuie-glace (7) est fixée de manière remplaçable sur le corps de balai d'essuie-glace (5).

12. Installation d'essuie-glace pour nettoyer des vitres de véhicules, comprenant au moins un bras d'essuie-glace (1) et au moins un balai d'essuie-glace (2, 2a) prévu sur le bras d'essuie-glace (1) avec au moins un canal de pulvérisation (9, 10) présentant au moins une ouverture de buse (11), lequel est connecté par le biais d'une conduite d'alimentation (15) à une unité d'alimentation (15) en liquide de lavage et de nettoyage, **caractérisée en ce que** l'au moins un balai d'essuie-glace (2, 2a) est réalisé selon l'une quelconque des revendications précédentes, et **en ce que** l'au moins un élément chauffant électrique (20, 20a, 20b) est connecté à une unité d'alimentation électrique du côté du véhicule ou à un étage excitateur (22) de cette unité d'alimentation.

13. Installation d'essuie-glace selon la revendication 12, **caractérisée en ce que** l'au moins un élément chauffant (20, 20a, 20b) se compose d'une portion de l'élément chauffant disposée dans l'au moins un balai d'essuie-glace (2, 2a) ainsi que d'au moins une autre portion de l'élément chauffant pour le chauffage d'au moins une longueur partielle de l'au moins une conduite d'alimentation (15).

14. Installation d'essuie-glace selon l'une quelconque des revendications précédentes, **caractérisée par** une unité d'alimentation électrique (19, 22), avec laquelle l'au moins un élément chauffant (20, 20a, 20b) ou la puissance de chauffage de cet élément chauffant est commuté(e) ou commandé(e) en fonction de paramètres de l'environnement (par exemple la température extérieure au véhicule) et/ou de paramètres de fonctionnement du véhicule (par exemple la vitesse de conduite et/ou la fréquence de l'installation d'essuie-glace).

15. Installation d'essuie-glace selon l'une quelconque des revendications précédentes, **caractérisée en ce que** l'unité d'alimentation électrique (19, 22) pour une commande ou une régulation de l'au moins un élément chauffant (20, 20a, 20b) est réalisée de manière à ce que l'activation de l'au moins un élément chauffant (20, 20a, 20b) se produise seulement quand la température extérieure au véhicule est en dessous d'une valeur seuil prédéfinie, par exemple une température d'environ 5°C, et/ou **en ce que** l'au moins un élément chauffant (20, 20a, 20b) fonctionne d'abord à une puissance de chauffage accrue après chaque activation.
